# EUROPEAN PATENT SPECIFICATION

(11) **EP 2 019 511 B1**
(45) Date of publication and mention of the grant of the patent: **14.04.2010**
(21) Application number: 07290927.8
(22) Date of filing: 24.07.2007
(51) Int. Cl.: H04L 12/24

(54) **Method for monitoring a statistical multiplexed data stream, monitoring device and gateway**
Verfahren zur Überwachung eines statistisch multiplexierten Datenstroms, Überwachungsvorrichtung und Gateway
Procédé de surveillance d'un flux de données multiplexé statistiquement, dispositif de surveillance de flux et passerelle

(43) Date of publication of application: 28.01.2009
(73) Proprietor: Alcatel Lucent, 75008 Paris (FR)
(72) Inventor: Lautenschlaeger, Wolfram, Dr., 74343 Sachsenheim (DE)
(74) Representative: Schmidt, Werner Karl

(56) References cited:
- US-B1- 6 751 664
- LAUTENSCHTAGER W: "Bandwidth Dimensioning in Stochastic Packet Networks" ITG-FACHBERICHTE, VDE VERLAG, BERLIN, DE, vol. 201, May 2007 (2007-05), pages 177-182, XP009094301 ISSN: 0932-6022

## Description

### Background of the Invention

The invention relates to a method for monitoring a statistical multiplexed data stream for compliance with an announced property indicative of the granularity of the data stream, in particular an announced equivalent access bandwidth, to a monitoring unit for monitoring a statistical multiplexed data stream for compliance with such an announced property indicative of the granularity of the data stream, in particular with an announced equivalent access bandwidth, and to a gateway for transferring a data stream comprising such a monitoring unit.

The industry fraction in favor of network neutrality wants to grow a global network, that is functioning purely on brute force overdimensioning. It is well known, that the required degree of overdimensioning depends on the access bandwidth of end user applications. Networks *without* such limitation of the end user access bandwidth cannot give any transmission guarantees (e.g. traditional LANs) and thus cannot serve as a model for the global universal network.

US 6,751,664 B1 discloses a method for monitoring customer bandwidth demand by comparing mean access router uplink utilization to a prescribed threshold value that is computed based upon granular measurements of uplink utilization, thus providing an indication of whether customer demand is met with a statistical level of confidence.

Account for access bandwidth is faced with two problems: First of all the access bandwidth ranges from e.g. 64 kbit/s for a VolP (Voice over IP) application up to multi Gbit/s e.g. for FTP (file transfer protocol) sessions. Not all parts of the global network need to be (and will not be) prepared for the largest available access bandwidths. Equivalent access bandwidth is, beyond traffic load, a parameter which is characteristic of the granularity of a data stream which is propagated through the network.

Starting from the end users (where the access bandwidths are obvious), the equivalent access bandwidth figures can be propagated to higher layers of a hierarchical network. In case of inhomogeneous access bandwidths this can be done by calculating the weighted mean of the equivalent access bandwidths of the flows of the previous layer(s) weighted with the mean traffic load of each flow. Yet, as such a hierarchical network is in general not owned by one single network operator, signaling of access bandwidth figures at gateways located at peering points between network operators might be prone to fraud as long as the announced equivalent access bandwidth cannot be cross-checked. Moreover, peering points between operators are typically far away from the end user access, which complicates the matter additionally.

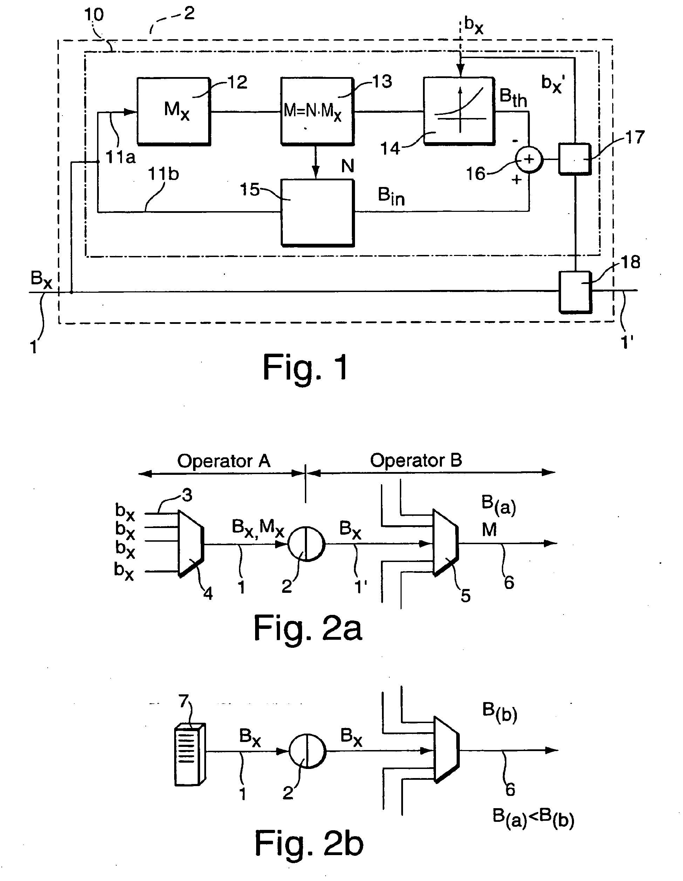

The problem described above is illustrated in the following with reference to Figs. 2a,b. In Fig. 2a, a data stream 1 is delivered from a first network operator A to a gateway **2,** the data stream 1 having been statistically multiplexed from a number of thin flows **3** with identical access bandwidths **bₓ** in a first statistical multiplexer **4.** The data stream 1 is delivered to the gateway 2 with appropriate overdimensioning at a gross bandwidth **Bₓ** representing the actual (physically available) bandwidth of the transmission line at the gateway 2. The equivalent access bandwidth bₓ at the output of the first statistical multiplexer 4 is invariant to the multiplexing, and therefore is still equal to the access bandwidths bₓ of the particular inputs.

A second operator B uses the data stream **1'** at the output of the gateway 2 for a further statistical multiplexing into a larger pipe of gross bandwidth **B₍ₐ₎** in a second statistical multiplexer **5.** For dimensioning of that pipe, operator B has to take into account the equivalent access bandwidth and the mean load **M** on his own output link **6,** which depends inter alia on the gateway load **Mₓ.**

The situation is completely different in the case shown in Fig. 2b. Instead of multiple thin access flows 3 with an access bandwidth bₓ which are statistically multiplexed to form the data stream 1, a single end user **7** is present which uses up all the actual bandwidth Bₓ, being equal to the equivalent access bandwidth in this case. The second operator B might see the same mean load Mₓ at the output of the gateway 2. Nevertheless, the dimensioning of the bandwidth **B_{(b)}** at the output link 6 has to be based on *Bₓ*, not anymore on *bₓ*. With typically *bₓ* << *Bₓ*, the second operator B of Fig. 2b needs to dimension his output pipe with a bandwidth B_{(b)} >> B₍ₐ₎.

Unfortunately, the second operator B does not really see the granularity of the traffic which is delivered from the first operator A to the input of the gateway 2. Even the first operator A could be uncertain about the granularity of the data flow when more complicated routings as the ones shown in Figs. 2a,b have to be taken into account. Therefore, there is a need for the second operator B to gradually differentiate between the two extreme cases described above, and a need for the first operator A to cross-check the equivalent access bandwidth he is delivering to the second operator B in more complicated network scenarios.

### Object of the Invention

It is the object of the invention to provide a monitoring method, a monitoring unit and a gateway as described above which allow checking if the statistics of a data flow with respect to its granularity corresponds to an announced value, in particular to an announced equivalent access bandwidth.

### Short Description of the Invention

This object is achieved by a method comprising the steps of: determining a theoretical bandwidth derived from page 1 of claims from the data stream based on the announced property, on a long-term mean value of a traffic load of the data stream, and on a preset factor N from page 1 of claims, determining an instantaneous bandwidth derived from the data stream by counting the occupation of a sliding window over N time slots of the data stream, and comparing the theoretical bandwidth to the instantaneous bandwidth.

The central idea of the invention is to perform virtual multiplexing of the data stream with samples of itself in two different ways and to compare the resulting bandwidth requirements of the virtually multiplexed data streams, the preset factor N defining the multiplexing factor for the virtual multiplexing. In the following, it is assumed that the data stream has a gross bandwidth Bₓ and an announced equivalent access bandwidth bₓ, as is the case for the data stream 1 of Fig. 2a.

For determining the theoretical bandwidth, the long-term average Mₓ of the traffic load of a first copy of the data stream is measured. Then, the long-term mean value M of the virtually multiplexed data stream is calculated, which is equal to N times the mean value Mₓ of the original data stream. The expected gross (theoretical) bandwidth Bₜₕ of the virtually multiplexed data stream can then be calculated based on the mean value M, the announced equivalent access bandwidth bₓ and a preset loss probability, as described in detail in the article "Bandwidth Dimensioning in Stochastic Packet Networks", by W. Lautenschläger, Photonische Netze 2007: Vorträge der 8. ITG-Fachtagung vom 7. bis 8. Mai 2007 in Leipzig, Berlin: VDE, 2007, ISBN 978-3-8007-3030-8. In practice, the determination of the theoretical bandwidth can be done based on the inputs described above by using a pre-calculated interpolation table.

The instantaneous bandwidth is determined based on instantaneous load figures. For this purpose, the sliding sum of the last N time slots (a time slot normally corresponds to a maximum packet size in packet-switched networks) corresponds to the instantaneous bandwidth Bᵢₙ from the multiplex of N times the same, however, time shifted data stream. Whenever the instantaneous bandwidth Bᵢₙ exceeds the theoretical bandwidth Bₜₕ, the latter is insufficient and a (virtual) packet loss occurs.

Special attention should be put on the determination of the instantaneous bandwidth based on the sliding sum: Normally the superposition of a data stream with copies of itself is deterministic due to the correlation, whereas the theory for determining of the theoretical bandwidth is based on the assumption of statistically independent inputs. The special trick, why the comparison of both bandwidths does work anyway, is the speed up form the access bandwidths *bₓ* of the flows 3 of Fig. 2a to the physically available bandwidth Bₓ in the premises of the first operator A. Any one of the original data flows 3 is transmitted with a maximum speed of bₓ (measured e.g. in Kbit/s). However, the first operator A generally chooses an actual physical bandwidth Bₓ which is typically much higher than the (equivalent) access bandwidth bₓ. Therefore, in general, there is only one packet originating from one and the same of the data flows 3 every Bₓ/bₓ time slots. In consequence, in a sliding window of N packet distances there should not be any two packets from the same original data flow 3. Presence or absence of packets in the sliding window is therefore de-correlated. The proposition of statistical independence between the multiplexed components is therefore also satisfied when determining the instantaneous bandwidth Bᵢₙ. In this respect, it should be mentioned that the long-term mean value Mₓ of the data stream is taken over a number of time slots which is considerably, e.g. by a factor of 100 to 1000, larger than the preset number N.

The situation looks different, if the announced equivalent access bandwidth bₓ is not the one shown in the situation of Fig. 2a. In case of a much higher real access bandwidth, bₓ" > bₓ, the sliding window is too big, such that more than one packet originating from one and the same data flow 3 contributes to the sum. The proposition of statistical multiplexing is violated and in consequence the required instantaneous bandwidth is much higher than expected. Frequent overflow events when comparing the instantaneous bandwidth to the theoretical bandwidth signal the mismatch. The overflow events can be used for passive monitoring by simply comparing the overflow rate with the assumed loss rate in the calculations of the theoretical bandwidth.

In a preferred variant, the preset factor N is chosen to be smaller or equal to a ratio between the physically available bandwidth and the announced equivalent access bandwidth. Preferably, the preset factor N is the largest integer number which is smaller than the above ratio. As described above, using such a relation for calculating the preset factor, the condition that the traffic in the sliding window is de-correlated is normally satisfied, unless operator A uses a physical bandwidth which is larger than required in order to account for possible network upgrades.

The person skilled in the art will appreciate that the invention is not limited to the use of the equivalent access bandwidth as a measure for the granularity of a data stream, and that other quantitative measures may also be used for this purpose. In any case, the preset multiplexing factor N should be chosen in such a way that de-correlation of the samples in the sliding window is guaranteed in case that the data stream exhibits the announced granularity.

In a further preferred variant, for deriving the theoretical bandwidth, foreseeable changes of the long-term mean value are taken into account. Such foreseeable changes may occur periodically, e.g. each day due to daylight synchronization of users. As at a given time tᵢₙ, the sliding window takes into account only the sum over the small number N of preceding time slots, the instantaneous bandwidth increases rapidly when fast changes of the traffic load occur, whereas the long-term mean value adjusts rather slowly to these changes. Therefore, the long-term mean value could be multiplied by an additional factor which accounts for those foreseeable changes of the mean traffic load and thus improves the precision when comparing both bandwidths.

In a highly preferred variant, the value of the announced property, in particular of the equivalent access bandwidth is adapted in dependence of the outcome of the comparison between the theoretical bandwidth and the instantaneous bandwidth. The overflow events can be used to adapt the equivalent access bandwidth figures: In case of too much overflow events, bₓ is slowly increased, in case of no overflow events, bₓ is slowly decreased. The modified value of the equivalent access bandwidth can be used for the calculation of the theoretical bandwidth and may also be signalled to the first and/or the second operator.

The overflow events may also be used to drop real packets in order to tear down the violating traffic at the gateway with the intention to protect the upper layers of the network of the second operator B.

The invention is also realized in a monitoring device for monitoring a statistical multiplexed data stream for compliance with an announced property indicative of the granularity of the data stream, in particular with an announced equivalent access bandwidth, with: an averaging device for deriving a long-term mean value from the data stream, a theoretical bandwidth determining device for determining from page 1 of claims a theoretical bandwidth depending on the announced property, on the long-term mean value from page 2 of claims, and on a preset factor N from page 1 of claims, an instantaneous bandwidth determining device for determining an instantaneous bandwidth derived from the data stream by counting the occupation of a sliding window over N time slots of the data stream, and a comparator for comparing the theoretical bandwidth to the instantaneous bandwidth. The monitoring unit preferably further comprises a multiplexing factor fixing unit for fixing the preset factor N at a value smaller or equal to the ratio between an available bandwidth and the announced equivalent access bandwidth. It is further preferred when the theoretical bandwidth determining device determines the theoretical bandwidth by taking foreseeable changes of the long-term mean value into account. Furthermore, the monitoring unit preferably comprises an equivalent access bandwidth adaptation unit for adapting the equivalent access bandwidth depending on the output from the comparator. Concerning advantages of the monitoring device and of the modifications described above, reference is made to the above discussion of the monitoring method.

The invention further relates to a gateway for transferring a data stream, comprising a monitoring device as described above, preferably further comprising a data stream adaptation unit for adapting the data stream to fit to the announced property. In case that the data stream does not fit to the announced property, the data stream adaptation unit may be used as a buffer for holding back packets which are not in compliance with the announced property, the data stream adaptation unit trying to transmit these packets later when empty time slots are available.

In a highly preferred embodiment, for adapting the data stream to fit to the announced property, the data stream adaptation unit drops part of the data stream. In this way, the violating traffic is dropped at the gateway with the intention to protect successive parts of the network, which is in conformity with the TCP congestion avoidance mechanism.

Further characteristics and advantages of the invention are provided in the following description of exemplary embodiments of the invention, with reference to the figures of the drawing, which shows details that are significant in the context of the invention, and in the claims. The individual characteristics can be implemented individually by themselves, or several of them can be implemented in any desired combination in a variant of the invention.

### Drawing

The invention is shown in the drawing.
- **Fig. 1**: shows a schematic diagram of an embodiment of a gateway according to the invention comprising a monitoring device for monitoring a data stream, and
- **Figs. 2a,b**: shows a gateway at a peering point for transferring a data stream from a first to a second operator of a computer network.

**Fig. 1** shows the gateway 2 between the first statistical multiplexer 4 and the second statistical multiplexer 5 of the network shown in Figs. 2a,b in detail. The gateway 2 transfers an input data stream 1 from the first operator A into an output data stream 1' for the second operator B. For monitoring the statistical multiplexed input data stream 1 for compliance with an announced equivalent access bandwidth bₓ, a monitoring device **10** is arranged in the gateway, a copy of the data stream 1 being provided to its input. This copy of the data stream 1 is fed to a first signal path **11a** and to a second signal path **11b** of the monitoring device 10. In both signal paths 11a, 11b a multiplexing of the copy of the data stream 1 with itself is simulated, as will be described in the following. In the first path 11a, an averaging device **12** for deriving a long-term mean value Mₓ from the data stream 1 is arranged. In a multiplexing factor fixing unit **13,** the long-term mean value Mₓ is then multiplied by a virtual multiplexing factor **N** which is chosen to be smaller or equal to the ratio Bₓ / bₓ between the available bandwidth Bₓ at the gateway 2 and the announced equivalent access bandwidth bₓ, which are provided to the preset factor fixing unit 13 by the first operator A of the network (not shown). The multiplexing factor N depends upon the number and nature of end users connected to the input of the gateway 2 and may consequently differ considerably depending on the network equipment used. Typical values of N range from about 10 to about 1000, in some cases up to 10000 or more.

The multiplication of the long-term mean value Mₓ of the copy of the original data stream 1 with the multiplexing factor N results in the long term-mean value M = N Mₓ of the virtually multiplexed data stream. The expected theoretical bandwidth **Bₜₕ** of the virtually multiplexed data stream is then calculated in a theoretical bandwidth determining device **14** based on the mean value M, the announced equivalent access bandwidth bₓ provided by the first operator A (dashed line) and a desired loss probability along the lines described in the inventor's article cited above. In practice, a look-up table may be used for determining the theoretical bandwidth Bₜₕ in dependence of these input values.

For taking foreseeable changes of the long-term mean value Mₓ into account, e.g. daily changes due to daylight synchronization of users, either the theoretical bandwidth determining device 14, the averaging unit 12, or the multiplexing factor fixing unit 13 are constructed to modify the value of the theoretical bandwidth Bₜₕ. At a given time, the sliding window takes into account only the sum over a small number N of preceding time slots and thus the instantaneous bandwidth Bᵢₙ may increase rapidly, whereas the long-term mean value adjusts rather slowly to rapid changes. Therefore, the long-term mean value Mₓ may be multiplied by an additional factor which accounts for those changes and thus improves the precision when comparing the theoretical bandwidth Bₜₕ to the instantaneous bandwidth Bᵢₙ.

In the second path 11 b, an instantaneous bandwidth determining device **15** is arranged for determining an instantaneous bandwidth **B**ᵢₙ derived from the data stream 1 by counting the occupation of a sliding window (not shown) over a corresponding number **N** of time slots, the number N being provided to the bandwidth determining device 15 from the multiplexing factor fixing unit 13. The occupation of the time slots of the sliding window is determined by summing up the actual packet sizes being present in the window, and normalized to the size of a time slot.

The theoretical bandwidth Bₜₕ and the instantaneous bandwidth Bᵢₙ at the outputs of the paths 11a, 11b are compared in a comparator **16.** In case that the equivalent access bandwidth bₓ of the data stream 1 is larger than the contracted value, an overflow occurs which would lead to a virtual packet loss. By counting the overflow events a passive monitoring of the data stream 1 can be provided when comparing the overflow rate with the assumed loss rate in the calculations of the theoretical bandwidth Bₜₕ. Thus, the adherence of the first operator A to the contracted equivalent access bandwidth can be checked either by the second operator B or by the first operator A himself.

In Fig. 1, the adherence to the announced equivalent access bandwidth is not only monitored, but adjusted in an equivalent access bandwidth adaptation unit **17** for adapting the equivalent access bandwidth in dependence of the output from the comparator 16. In case of too much overflow events, the announced equivalent access bandwidth bₓ provided as an input to the theoretical bandwidth determination device 14 is slowly increased by adding a positive number **bₓ'** to the announced equivalent bandwidth bₓ, whereas in case of no overflow events, the announced equivalent access bandwidth bₓ is slowly decreased by adding a negative number bₓ' to the announced equivalent access bandwidth bₓ. In this way, an estimation of the actual value of the equivalent access bandwidth bₓ" = bₓ + bₓ' can be provided to the first or second operator A, B (not shown).

The gateway 2 of Fig. 1 further comprises a data stream adaptation unit **18** which is operatively connected to the equivalent access bandwidth adaptation unit 17. The data stream adaptation unit 18 compares the actual equivalent access bandwidth bₓ" to the announced equivalent access bandwidth bₓ and adapts the data stream 1 to fit to the latter by either buffering part of the packets for later transmission, or by tearing down the violating traffic by intentional packet drop with respect to the degree of violation, in conformity with the TCP congestion avoidance mechanism. In either case, the data stream 1' at the output of the gateway 2 fits to the announced statistical granularity profile. It is understood that the adaptation of the data stream may be performed independently of the adaptation of the equivalent access bandwidth, i.e. the data stream adaptation unit 18 may also be connected directly to the comparator 16 for dropping data packets in dependence of the number of overflow events.

In summary, in the way described above, monitoring of a data stream for compliance with an announced equivalent access bandwidth bₓ is achieved, thus making it possible for network operators to check and estimate the granularity of the data stream e.g. at a peering point of the network, and to modify the data stream in case the data stream does not fit into the announced profile. It is understood that the elements of the gateway 2 of Fig. 1 do not necessarily correspond to physical entities, and that the whole calculation in the monitoring device 10 may be implemented in a suitable hardware such as an ASIC. Furthermore, the monitoring unit 2 and the data stream adaptation unit 18 may be located at any point in the hierarchical network where the equivalent access bandwidth needs to be monitored.

## Claims

1. Method for monitoring a statistical multiplexed data stream (1) for compliance with an announced property indicative of the granularity of the data stream (1), in particular an announced equivalent access bandwidth (bₓ), comprising the steps of:
determining a theoretical bandwidth (Bₜₕ) derived, by virtual multiplexing of the data stream (1) with itself, from the data stream (1) based on the announced property, on a long-term mean value (Mₓ) of a traffic load of the data stream (1), and on a preset factor N representing a multiplexing factor for the virtual multiplexing,
determining an instantaneous bandwidth (Bᵢₙ) derived from the data stream (1) by counting the occupation of a sliding window over N time slots of the data stream (1), and comparing the theoretical bandwidth (Bₜₕ) to the instantaneous bandwidth (Bᵢₙ).

2. Method according to claim 1, wherein the preset factor N is chosen to be smaller or equal to a ratio (Bₓ / bₓ) between a physically available bandwidth (Bₓ) and the announced equivalent access bandwidth (bₓ).

3. Method according to claim 1, wherein for deriving the theoretical bandwidth (Bₜₕ), foreseeable changes of the long-term mean value (Mₓ) are taken into account.

4. Method according to claim 1, wherein the value of the announced property, in particular of the equivalent access bandwidth (bₓ), is adapted in dependence of the outcome of the comparison between the theoretical bandwidth (Bₜₕ) and the instantaneous bandwidth (Bᵢₙ).

5. Monitoring device (10) for monitoring a statistical multiplexed data stream (1) for compliance with an announced property indicative of the granularity of the data stream (1), in particular with an announced equivalent access bandwidth (bₓ), with:
an averaging device (12) for deriving a long-term mean value (Mₓ) from the data stream (1),
a theoretical bandwidth determining device (14) for determining by virtual multiplexing of the data stream (1) with itself, a theoretical bandwidth (Bₜₕ) depending on the announced property, on the long-term mean value (Mₓ) of a traffic load of the data stream (1) and on a preset factor N representing a multiplexing factor for the virtual multiplexing,
an instantaneous bandwidth determining device (15) for determining an instantaneous bandwidth (Bᵢₙ) derived from the data stream (1) by counting the occupation of a sliding window over N time slots of the data stream (1), and
a comparator (16) for comparing the theoretical bandwidth (Bₜₕ) to the instantaneous bandwidth (Bᵢₙ).

6. Monitoring device according to claim 5, further comprising a multiplexing factor fixing unit (13) for fixing the preset factor N at a value smaller or equal to the ratio (Bₓ / bₓ) between a physically available bandwidth (Bₓ) and the announced equivalent access bandwidth (bₓ).

7. Monitoring device according to claim 5, wherein the theoretical bandwidth determining device (14) is for determining the theoretical bandwidth (Bₜₕ) taking foreseeable changes of the long-term mean value (Mₓ) into account.

8. Monitoring device according to claim 5, further comprising an equivalent access bandwidth adaptation unit (17) for adapting the equivalent access bandwidth (bₓ) depending on the output from the comparator (16).

9. Gateway (2) for transferring a data stream (1), comprising a monitoring device (10) according to claim 5, preferably further comprising a data stream adaptation unit (18) for adapting the data stream (1) to fit to the announced property.

10. Gateway according to claim 9, wherein for adapting the data stream (1) to fit to the announced property, the data stream adaptation unit (18) drops part of the data stream (1).

## Patentansprüche

1. Verfahren zum Überwachen eines statistisch gemultiplexten Datenstroms (1) auf Einhaltung einer gemeldeten Eigenschaft, welche die Granularität des Datenstroms (1) anzeigt, insbesondere einer gemeldeten entsprechenden Zugangsbandbreite (bx), wobei das Verfahren die folgenden Schritte umfasst:
Bestimmen einer theoretischen Bandbreite (Bₜₕ), welche durch das virtuelle Multiplexen des Datenstroms (1) mit sich selbst aus dem Datenstrom (1) auf der Basis der gemeldeten Eigenschaft, eines Langzeitmittelwerts (Mₓ) einer Verkehrslast des Datenstroms (1) und eines vorgegebenen Faktors N, welcher einen Multiplexfaktor für das virtuelle Multiplexen darstellt, abgeleitet wird,
Bestimmen einer momentanen Bandbreite (Bᵢₙ), welche durch Zählen der Belegung eines Schiebefensters über N Zeitschlitze des Datenstroms (1) und Vergleichen der theoretischen Bandbreite (Bₜₕ) mit der momentanen Bandbreite (Bᵢₙ) von dem Datenstrom (1) abgeleitet wird.

2. Verfahren nach Anspruch 1, wobei der gewählte vorgegebene Faktor N kleiner als ein oder gleich einem Verhältnis (Bₓ/bₓ) zwischen einer physisch verfügbaren Bandbreite (Bₓ) und der gemeldeten entsprechenden Zugangsbandbreite (bₓ) ist.

3. Verfahren nach Anspruch 1, wobei für das Ableiten der theoretischen Bandbreite (Bₜₕ) voraussehbare Änderungen des Langzeitmittelwerts (Mₓ) berücksichtigt werden.

4. Verfahren nach Anspruch 1, wobei der Wert der gemeldeten Eigenschaft, insbesondere der entsprechenden Zugangsbandbreite (bₓ), in Abhängigkeit von dem Ergebnis des Vergleiches zwischen der theoretischen Bandbreite (Bₜₕ) und der momentanen Bandbreite (Bᵢₙ) angepasst wird.

5. Überwachungsvorrichtung (10) zum Überwachen eines statistisch gemultiplexten Datenstroms (1) auf Einhaltung einer gemeldeten Eigenschaft, welche die Granularität des Datenstroms (1) anzeigt, insbesondere einer gemeldeten entsprechenden Zugangsbandbreite (bx), mit:
Einer Mittelungseinrichtung (12) zum Ableiten eines Langzeitmittelwerts (Mₓ) von dem Datenstrom (1),
einer theoretischen Bandbreiten-Bestimmungseinrichtung (14) zur Bestimmung einer theoretischen Bandbreite (Bₜₕ) durch das virtuelle Multiplexen des Datenstroms (1) mit sich selbst in Abhängigkeit von der gemeldeten Eigenschaft, von dem Langzeitmittelwert (Mₓ) einer Verkehrslast des Datenstroms (1) und von einem vorgegebenen Faktor N, welcher einen Multiplexfaktor für das virtuelle Multiplexen darstellt,
einer momentan Bandbreiten-Bestimmungseinrichtung (15) zur Bestimmung einer momentanen Bandbreite (Bᵢₙ), welche durch Zählen der Belegung eines Schiebefensters über N Zeitschlitze des Datenstroms (1) und
einem Komparator (16) zum Vergleichen der theoretischen Bandbreite (Bₜₕ) mit der momentanen Bandbreite (Bᵢₙ) aus dem Datenstrom (1) abgeleitet wird.

6. Überwachungsvorrichtung nach Anspruch 5, weiterhin umfassend eine Multiplexfaktor-Festlegungseinheit (13) zum Festlegen des vorgegebenen Faktors N auf einen Wert, welcher kleiner als das oder gleich dem Verhältnis (Bₓ/bₓ) zwischen einer physisch verfügbaren Bandbreite (Bₓ) und der gemeldeten entsprechenden Zugangsbandbreite (bₓ) ist.

7. Überwachungsvorrichtung nach Anspruch 5, wobei die theoretische Bandbreiten-Bestimmungseinrichtung (14) dafür vorgesehen ist, die theoretische Bandbreite (Bₜₕ) unter Berücksichtigung von voraussehbaren Änderungen des Langzeitmittelwerts (Mₓ) zu bestimmen.

8. Überwachungsvorrichtung nach Anspruch 5, weiterhin umfassend eine entsprechende Zugangsbandbreiten-Adaptionseinheit (17) für das Anpassen der entsprechenden Zugangsbandbreite (bₓ) in Abhängigkeit von der Ausgabe aus dem Komparator (16).

9. Gateway (2) für die Übertragung eines Datenstroms (1), umfassend eine Überwachungsvorrichtung (10) nach Anspruch 5, vorzugsweise weiterhin umfassend eine Datenstrom-Adaptionseinheit (18) zum Anpassen des Datenstroms (1) an die gemeldete Eigenschaft.

10. Gateway nach Anspruch 9, wobei die Datenstromanpassungseinheit (18) zum Anpassen des Datenstroms (1) an die gemeldete Eigenschaft einen Teil des Datenstroms (1) entnimmt.

## Revendications

1. Procédé de surveillance d'un flux de données statistiques multiplexées (1) pour établir leur conformité avec une propriété annoncée indicative de la granularité du flux de données (1), en particulier une bande passante d'accès équivalente annoncée (bₓ), comprenant les étapes suivantes :
détermination d'une bande passante théorique (Bₜₕ) dérivée, par multiplexage virtuel du flux de données (1) avec lui-même, du flux de données (1) sur la base de la propriété annoncée, sur une valeur moyenne à long terme (Mₓ) d'une charge de trafic du flux de données (1), et sur un facteur préétabli N représentant un facteur de multiplexage pour le multiplexage virtuel,
détermination d'une bande passante instantanée (Bᵢₙ) dérivée du flux de données (1), en comptant l'occupation d'une fenêtre coulissante sur N intervalles temporels du flux de données (1), et en comparant la bande passante théorique (Bₜₕ) à la bande passante instantanée (Bᵢₙ).

2. Procédé selon la revendication 1, dans lequel le facteur préétabli N est choisi de manière à être inférieur ou égal à un rapport (Bₓ/bₓ) entre une bande passante physiquement disponible (Bₓ) et la bande passante d'accès équivalente annoncée (bₓ).

3. Procédé selon la revendication 1, dans lequel, pour dériver la bande passante théorique (Bₜₕ), les changements prévisibles de la valeur moyenne à long terme (Mₓ) sont pris en compte.

4. Procédé selon la revendication 1, dans lequel la valeur de la propriété annoncée, en particulier de la bande passante d'accès équivalente (bₓ) est adaptée en fonction du résultat de la comparaison entre la bande passante théorique (Bₜₕ) et la bande passante instantanée (Bᵢₙ).

5. Dispositif de surveillance (10) pour surveiller un flux de données statistiques multiplexées (1) pour établir leur conformité avec une propriété annoncée indicative de la granularité du flux de données (1), en particulier une bande passante d'accès équivalente annoncée (bₓ), comprenant :
un dispositif de calcul de moyenne (12) pour dériver une valeur moyenne à long terme (Mₓ) du flux de données (1),
un dispositif de détermination de bande passante théorique (14) pour déterminer, par multiplexage virtuel du flux de données (1) avec lui-méme, une bande passante théorique (Bₜₕ) en fonction de la propriété annoncée, sur la valeur moyenne à long terme (Mₓ) d'une charge de trafic du flux de données (1), et sur un facteur préétabli N représentant un facteur de multiplexage pour le multiplexage virtuel,
un dispositif de détermination de bande passante instantanée (15) pour déterminer une bande passante instantanée (Bᵢₙ) dérivée du flux de données (1) en comptant l'occupation d'une fenêtre coulissante sur N intervalles temporels du flux de données (1), et
un comparateur (16) pour comparer la bande passante théorique (Bₜₕ) à la bande passante instantanée (Bᵢₙ).

6. Dispositif de surveillance selon la revendication 5, comprenant en outre une unité de fixation de facteur de multiplexage (13) pour fixer le facteur préétabli N à une valeur inférieure ou égale au rapport (Bₓ/bₓ) entre une bande passante physiquement disponible (Bₓ) et la bande passante d'accès équivalente annoncée (bₓ).

7. Dispositif de surveillance selon la revendication 5, dans lequel le dispositif de détermination de bande passante théorique (14) sert à déterminer la bande passante théorique (Bₜₕ) en prenant en compte les changements prévisibles de la valeur moyenne à long terme (Mₓ).

8. Dispositif de surveillance selon la revendication 5, comprenant en outre une unité d'adaptation de bande passante d'accès équivalente (17) pour adapter la bande passante d'accès équivalente (bₓ) en fonction du résultat du comparateur (16).

9. Passerelle (2) pour transférer un flux de données (1), comprenant un dispositif de surveillance (10) selon la revendication 5, comprenant de préférence en outre une unité d'adaptation de flux de données (18) pour adapter le flux de données (1) à la propriété annoncée.

10. Passerelle selon la revendication 9, dans laquelle, pour adapter le flux de données (1) à la propriété annoncée, l'unité d'adaptation de flux de données (18) extrait une partie du flux de données (1).
